# EUROPÄISCHE PATENTSCHRIFT

(11) **EP 3 761 179 B1**
(45) Veröffentlichungstag und Bekanntmachung des Hinweises auf die Patenterteilung: **11.10.2023**
(21) Anmeldenummer: 20184249.9
(22) Anmeldetag: 06.07.2020
(51) Int. Cl.: G06F 11/07

(54) **VERFAHREN ZUR ÜBERPRÜFUNG DER FUNKTION EINES PROZESSORS DURCH EINEN WATCHDOG**
METHOD FOR TESTING THE FUNCTION OF A PROCESSOR BY A WATCHDOG
PROCÉDÉ DE VÉRIFICATION DU FONCTIONNEMENT D'UN PROCESSEUR PAR UN CHIEN DE GARDE

(30) Priorität: 05.07.2019 EP 19184773
(43) Veröffentlichungstag der Anmeldung: 06.01.2021
(73) Patentinhaber: Elmos Semiconductor SE, 44227 Dortmund (DE)
(72) Erfinder: Sudhaus, Andre, 44227 Dortmund (DE); Subijanto, Tan, 44227 Dortmund (DE)
(74) Vertreter: dompatent von Kreisler Selting Werner - Partnerschaft von Patent- und Rechtsanwälten mbB

(56) Entgegenhaltungen:
- DE-A1-102016 015 756

## Beschreibung

Die Erfindung betrifft ein Verfahren zur Überprüfung der Funktion eines Prozessors durch einen Watchdog.

Bei Prozessoren zur Steuerung sicherheitsrelevanter Vorrichtungen in Fahrzeugen, wie dies beispielsweise bei einem Airbag der Fall ist, ist die Überwachung des bestimmungsgemäßen Programmablaufs des Prozessors von entscheidender Bedeutung für die Sicherheit der betreffenden Anwendung. Hierzu sind unter dem Stichwort "Watchdog" zahlreiche Publikationen erschienen. Die Aufgabe eines Watchdog ist es, das zeitliche und das inhaltliche Verhalten des Prozessors anhand von Merkmalen und Signalisierungen zu bewerten und ggf. den Prozessor durch geeignete Rücksignalisierungen zu Gegenmaßnahmen zu veranlassen, wenn sein Verhalten von den Erwartungen abweicht.

Aus DE-C-10 056 408 ist ein Fenster-Watchdog bekannt. Die bekannte Vorrichtung dient zur Überwachung eines Prozessors, wobei der Watchdog bei wenigstens einem erkannten Fehler eine Fehlermeldung an den Prozessor überträgt und einen Fehlerzähler inkrementiert.

Diese reine Inkrementierung hat den Nachteil, dass die Vorrichtung in erster Linie lediglich für Systeme geeignet ist, die auf keinen Fall ein Fehlverhalten zeigen dürfen. Komplexere Systeme jedoch benötigen eine Laststeuerung. Daher wird oft ein Aufwärts-/Abwärtszähler verwendet. Dieser aber hat den Nachteil, dass der Zähler integrierend und damit bei oszillierenden aber trotzdem schlechten Ergebnissen wie ein Tiefpass wirkt. Solche oszillierenden Ergebnisse liegen beispielsweise dann vor, wenn mehrfach hintereinander die Überprüfergebnisse mal gut und mal schlecht sind.

In DE-B-10 2006 028 992, DE-A-10 2004 009 359, DE-A-42 34 910, WO-A-2011/072662, WO-A-2018/050908, US-A-4 594 685 und US-A-2004/0172580 sind weitere Watchdog-Konzepte beschrieben.

Aus DE-A-10 2016 015 756 ist ein Verfahren gemäß dem Oberbegriff des Anspruchs 1 bekannt.

Aufgabe ist der Erfindung ist es, ein Verfahren zur Überprüfung der Funktion eines Prozessors durch einen Watchdog zu schaffen, der leistungsfähiger als im Stand der Technik und insbesondere bei komplexeren Systemen einsetzbar ist.

Zur Lösung dieser Aufgabe wird mit der Erfindung ein Verfahren zur Überprüfung der Funktion eines Prozessors durch einen Watchdog mit den Merkmalen des Anspruchs 1 oder des Anspruchs 2; einzelne Ausgestaltungen der Erfindung sind Gegenstand der Unteransprüche.

Erfindungsgemäß ist also unter anderem vorgesehen, dass
- der Watchdog von dem Prozessor erhaltene Information hinsichtlich sowohl der Vollständigkeit und des Inhalts der Information als auch des Empfangs der Information innerhalb eines vorgegebenen Erwartungszeitfensters bewertet,
- der Watchdog
   - einem Erwartungszeitfenster ein GUT-Ereignis zuordnet, wenn die einzige Information oder zumindest eine der Informationen, die der Watchdog für ein Erwartungszeitfenster von dem Prozessor erhält, als sowohl vollständig und inhaltlich korrekt als auch zeitlich korrekt empfangen zu bewerten ist, und
   - einem Erwartungszeitfenster ein NICHT-Ereignis zuordnet, wenn der Watchdog keine Information empfängt oder wenn die einzige Information oder sämtliche Informationen, die der Watchdog für ein Erwartungszeitfenster von dem Prozessor erhält, nicht als vollständig und/oder nicht als inhaltlich korrekt und/oder nicht als zeitlich korrekt empfangen zu bewerten ist bzw. sind,
- der Watchdog untersucht, wie vielen Erwartungszeitfenstern und ggfs. welchen Erwartungszeitfenstern einer Gruppe aus M ggfs. aufeinanderfolgenden Erwartungszeitfenstern ein GUT-Ereignis zuzuordnen ist, und
- der Watchdog eine Fehlermeldung auslöst, wenn für eine Gruppe von M Erwartungszeitfenstern das Verhältnis aus GUT-Ereignissen zur Anzahl M einen vorgegebenen ersten Schwellwert unterschreitet.

Sollte sich bei der Untersuchung der Gruppe von M Erwartungszeitfenstern herausstellen, dass das Verhältnis aus GUT-Ereignissen zur Anzahl M der Erwartungszeitfenster gleich dem vorgegebenen ersten Schwellwert ist, so wird erfindungsgemäß dergestalt verfahren, dass der Watchdog
- untersucht, wie vielen Erwartungszeitfenstern und ggfs. welchen Erwartungszeitfenstern einer anderen Gruppe, ggfs. der folgenden oder einer der folgenden Gruppen aus M ggfs. aufeinanderfolgenden Erwartungszeitfenstern, die sich bezüglich zumindest eines der Erwartungszeitfenster von den Erwartungszeitfenstern der besagten einen Gruppe unterscheiden, ein GUT-Ereignis zuzuordnen ist, und
- erst dann eine Fehlermeldung auslöst, wenn das Verhältnis aus diesen GUT-Ereignissen zur Anzahl M einen zweiten Schwellwert, der größer ist als der erste Schwellwert, unterschreitet.

Hierbei werden also die Anforderungen an die Bejahung der Funktionstüchtigkeit des Prozessors verschärft, und zwar durch Erhöhung des geforderten Mindestmaßes an GUT-Ereignissen, und zwar bei Beibehaltung der Anzahl M von Erwartungszeitfenstern bei jedoch gegenüber dem ersten Schwellwert erhöhtem zweiten Schwellwert. Die weitere Gruppe von M Erwartungszeitfenstern, die für diese Anschlussuntersuchung zugrunde gelegt wird, kann sich direkt an die vorherige untersuchte Gruppe von M Erwartungszeitfenstern anschließen, kann aber auch zumindest zum Teil hinsichtlich der Erwartungszeitfenster identisch sein mit denjenigen der vorherigen Gruppe. Dies alles ist applikationsabhängig. Entscheidend ist, dass sich die weitere Gruppe von M Erwartungszeitfenstern hinsichtlich zumindest eines Erwartungszeitfensters von der vorherigen Gruppe unterscheidet. Damit ist gemeint, dass in dieser weiteren Gruppe diejenigen Informationen berücksichtigt werden, die für mindestens eines der Erwartungszeitfenster der vorherigen Gruppe, maximal aber für M -1 der Erwartungszeitfenster der vorherigen Gruppe geliefert worden sind.

Eine weitere Alternative der erfindungsgemäßen Verschärfung der Anforderungen an die Bejahung der Funktionstüchtigkeit des Prozessors ist darin zu sehen, dass der Watchdog dann, wenn für mindestens eine Gruppe von M Erwartungszeitfenstern das Verhältnis aus GUT-Ereignissen zur Anzahl M gleich dem vorgegebenen ersten Schwellwert ist,
- untersucht, wie vielen Erwartungszeitfenstern und ggfs. welchen Erwartungszeitfenstern einer anderen, ggfs. der folgenden oder einer der folgenden Gruppen aus N, mit N<M, ggfs. aufeinanderfolgenden Erwartungszeitfenstern, die sich bezüglich zumindest eines der Erwartungszeitfenster von den Erwartungszeitfenstern der besagten einen Gruppe unterscheiden, ein GUT-Ereignis zuzuordnen ist, und
- erst dann eine Fehlermeldung auslöst, wenn das Verhältnis aus GUT-Ereignissen zur Anzahl N einen zweiten Schwellwert, der größer ist als der erste Schwellwert, unterschreitet.

Bei dieser Alternative wird also sowohl der zweite Schwellwert für das erwartete Verhältnis aus GUT-Ereignissen zur Anzahl untersuchter Erwartungszeitfenster erhöht als auch die Anzahl N der Gruppe an untersuchten Erwartungszeitfenstern verringert. Auch hier gilt, dass die in dieser weiteren Gruppe untersuchten Informationen, die für die Erwartungszeitfenster geliefert worden sind, bis auf die Informationen für zumindest ein Erwartungszeitfenster verschieden sein müssen von den für die der vorherigen Gruppe von M Erwartungszeitfenstern erhaltenen Informationen.

Bei der Erfindung wird also dergestalt verfahren, dass mehrere Informationen, die der Watchdog von dem Prozessor erhält, der Beurteilung zugrunde gelegt werden, ob der Watchdog eine Fehlermeldung auslösen sollte oder eine andere einen Fehler des Prozessors anzeigende (Fehler-) Reaktion initiiert. Die erwarteten mehreren Informationen verteilen sich auf mehrere Erwartungszeitfenster, d.h. M Erwartungszeitfenster, innerhalb derer jeweils eine oder zumindest eine formal und inhaltlich sowie zeitlich korrekte Information vom Prozessor an den Watchdog geliefert wird. Die Fehlermeldung bzw. die Fehlerreaktion wird nur dann ausgelöst, wenn für eine Gruppe von M Erwartungszeitfenstern das Verhältnis aus GUT-Ereignissen zur Anzahl M einen vorgegebenen ersten Schwellwert unterschreitet. Dabei liegt ein GUT-Ereignis dann vor, wenn von dem Prozessor für ein Erwartungszeitfenster eine in allen Belangen korrekte Information geliefert wird, also eine Information geliefert wird, die vollständig und inhaltlich korrekt ist sowie innerhalb des Erwartungszeitfensters empfangen wird. Hierbei ist es möglich, dass der Prozessor mehrere Informationen pro Erwartungszeitfenster liefert, wobei der Watchdog möglicherweise nur eine einzige Information erwartet. Solange dieser einzige oder mindestens eine der Informationen in allen Belangen korrekt ist, wird insgesamt auf GUT-Ereignis entschieden.

Sinngemäß wird also mit der Erfindung vorgeschlagen, nicht jede falsche Reaktion bzw. Aktion des Prozessors, die dem Watchdog gemeldet wird, sogleich für die Auslösung einer Fehlermeldung heranzuziehen bzw. als NICHT-Ereignis zu bewerten. Mit "Fehlermeldung" ist ganz allgemein gemeint, dass der Watchdog eine Signalisierung zum Anzeigen einer "Auffälligkeit" des Prozessors initiiert. Diese Initiierung und die Folgen einer derartigen Signalisierung sind applikationsabhängig und sollen daher hier nicht weiter behandelt werden. Ein Wesensmerkmal der Erfindung ist es, dass das, was der Watchdog an von dem Prozessor einem Erwartungszeitfenster zuzuordnender Information empfängt, entweder als GUT-Ereignis oder NICHT-Ereignis bewertet wird. Der Watchdog bewertet die vom Prozessor erhaltene Information hinsichtlich ihrer Vollständigkeit, ihres Inhalts und des zeitlichen Empfangs (Empfangszeitraum bzw. Erwartungszeitfenster). Der Watchdog erwartet also eine oder zumindest eine Information vom Prozessor innerhalb eines vorgegebenen Erwartungszeitfensters. Sofern die Information formal und inhaltlich korrekt ist und innerhalb des Erwartungszeitfensters eintrifft, bewertet der Watchdog dies als GUT-Ereignis. Erreichen den Watchdog mehrere Informationen (,wobei er an sich nur eine einzige Information erwartet), so reicht es ggfs. aus, dass eine (oder mehrere) dieser Informationen als GUT-Ereignis zu bewerten ist bzw. sind.

Wesentlich für die Erfindung ist ferner, dass eine falsche Reaktion des Prozessors nicht zu einem mehrfachen SCHLECHT- bzw. NICHT-Ereignis führt, es also insoweit nicht zu einer Fehlereskalation kommt, wie dies der Fall beim einfachen Zählen von Fehlern sein kann. Jeden Fehler zu zählen würde bei einem Fehlerzähler dazu führen, dass eine für ein Erwartungszeitfenster inhaltlich und formal korrekte, aber zu spät erhaltene Antwort, die erst im nächsten Erwartungszeitfenster oder außerhalb dieses (z.B. nach Ablauf des nächsten Erwartungszeitfensters) erhalten wird, mindestens zwei und möglicherweise auch drei Fehler induzieren würde, nämlich einen (ersten) Fehler wegen des ausbleibenden Empfangs der im aktuellen Erwartungszeitfenster gültigen Antwort, einen (zweiten) Fehler wegen der für das nachfolgende Erwartungszeitfenster inhaltlich oder formal falschen Antwort und ggfs. einen (dritten) Fehler, wenn die Antwort bezogen auf das nachfolgende Erwartungszeitfenster zeitlich nicht korrekt erfolgt. Vorteilhafterweise soll dieser Nachteil einer potentiell mehrfachen Fehlererfassung eines Einzelereignisses im Stand der Technik, wie im Beispiel die einzelne verspätete Antwort, durch die erfindungsgemäße Ausführung der Gut-Antwort-Bewertung durch den Watchdog vermieden werden.

Ein weiterer wesentlicher Vorteil der Erfindung ist also darin zu sehen, dass ein durch ein Einzelereignis gesteuerter Ablauf in einem Prozessor toleranter bewertet wird. Eine zeitbedingt inhaltlich obsolet gewordene Antwort des Prozessors an den Watchdog kann innerhalb eines vorliegenden Wertungszeitraumes korrigiert werden. Der wiederhergestellte Ablauf im Prozessor würde dadurch nachträglich gegenüber dem Watchdog dokumentiert werden können. Dies wird erreicht, indem nicht einzelne Erwartungszeitfenster und die für die einzelnen Erwartungszeitfenster erhaltene Information separat bewertet wird, sondern "gruppenweise", wobei allerdings pro Gruppe von Erwartungszeitfenstern eine Mindestanzahl an GUT-Ereignissen erwartet wird.

Anstelle der Bewertung einer Gruppe von M Erwartungszeitfenstern anhand des Verhältnisses aus GUT-Ereignissen zur Anzahl M der Erwartungszeitfenster kann gemäß einer Alternativen der Erfindung (siehe Anspruch 2) auch dergestalt verfahren werden, dass für die Nicht-Auslösung einer Fehlermeldung o.dgl. Fehlerreaktion durch den Prozessor erwartet wird, dass das Verhältnis aus NICHT-Ereignissen zur Anzahl M der Erwartungszeitfenster unterhalb eines ersten Schwellwerts liegt, der gleich dem oder verschieden sein kann von dem bereits oben genannten ersten Schwellwert. Mit dieser Variante der Erfindung wird also ein Verfahren zur Überprüfung der Funktion eines Prozessors durch einen Watchdog vorgeschlagen, wobei bei dem Verfahren gemäß dieser Variante der Erfindung
- der Watchdog von dem Prozessor erhaltene Information hinsichtlich sowohl der Vollständigkeit und des Inhalts der Information als auch des Empfangs der Information innerhalb eines vorgegebenen Erwartungszeitfensters bewertet,
- der Watchdog
   - einem Erwartungszeitfenster ein GUT-Ereignis zuordnet, wenn die einzige Information oder zumindest eine der Informationen, die der Watchdog für ein Erwartungszeitfenster von dem Prozessor erhält, als sowohl vollständig und inhaltlich korrekt als auch zeitlich korrekt empfangen zu bewerten ist,
      und
   - einem Erwartungszeitfenster ein NICHT-Ereignis zuordnet, wenn der Watchdog keine Information empfängt oder wenn die einzige Information oder sämtliche Informationen, die der Watchdog für ein Erwartungszeitfenster von dem Prozessor erhält, nicht als vollständig und/oder nicht als inhaltlich korrekt und/oder nicht als zeitlich korrekt empfangen zu bewerten ist bzw. sind,
- der Watchdog untersucht, wie vielen Erwartungszeitfenstern und ggfs. welchen Erwartungszeitfenstern einer Gruppe aus M ggfs. aufeinanderfolgenden Erwartungszeitfenstern ein NICHT-Ereignis zuzuordnen ist, und
- der Watchdog eine Fehlermeldung auslöst, wenn für eine Gruppe von M Erwartungszeitfenstern das Verhältnis aus NICHT-Ereignissen zur Anzahl M einen vorgegebenen ersten Schwellwert überschreitet.

Die Überlegungen hinsichtlich der Bewertung der für ein Erwartungszeitfenster gelieferten Informationen als GUT-Ereignis oder als NICHT-Ereignis sind gleich den Kriterien, die weiter oben im Zusammenhang mit der ersten Variante der Erfindung beschrieben sind. Auch die weiteren Eigenschaften des erfindungsgemäßen Verfahrens sind insoweit gleich denen, wie sie oben bereits beschrieben sind.

Gemäß einer ersten Alternative der erfindungsgemäßen Verschärfung der Anforderungen an die Bejahung der Funktionstüchtigkeit des Prozessors ist bei dieser Variante der Erfindung vorgesehen, dass der Watchdog dann, wenn für mindestens eine Gruppe von M Erwartungszeitfenstern das Verhältnis aus NICHT-Ereignissen zur Anzahl M gleich dem vorgegebenen ersten Schwellwert ist,
- untersucht, wie vielen Erwartungszeitfenstern und ggfs. welchen Erwartungszeitfenstern einer anderen, ggfs. der folgenden oder einer der folgenden Gruppen aus M ggfs. aufeinanderfolgenden Erwartungszeitfenstern, die sich bezüglich zumindest eines der Erwartungszeitfenster von den Erwartungszeitfenstern der einen besagten Gruppe unterscheiden, ein NICHT-Ereignis zuzuordnen ist, und
- erst dann eine Fehlermeldung auslöst, wenn das Verhältnis aus NICHT-Ereignissen zur Anzahl M einen zweiten Schwellwert, der kleiner ist als der erste Schwellwert, überschreitet.

Die Verschärfung der Anforderungen an die Funktionstüchtigkeit des Prozessors erfolgt hier durch Verringerung des zulässigen Maximalmaßes an NICHT-Ereignissen (von einem ersten Schwellwert zu einem niedrigeren zweiten Schwellwert), und zwar bei gleicher Anzahl M von jeweils zu betrachtenden Erwartungszeitfenstern.

Gemäß einer zweiten Alternativen der erfindungsgemäßen Verschärfung der Anforderungen an die Bejahung der Funktionstüchtigkeit des Prozessors wird bei dieser Variante der Erfindung vorgeschlagen, dass der Watchdog dann, wenn für mindestens eine Gruppe von M Erwartungszeitfenstern das Verhältnis aus NICHT-Ereignissen zur Anzahl M gleich dem vorgegebenen ersten Schwellwert ist,
- untersucht, wie vielen Erwartungszeitfenstern und ggfs. welchen Erwartungszeitfenstern einer anderen, ggfs. der folgenden oder eine der folgenden Gruppen aus N, mit N<M, ggfs. aufeinanderfolgenden Erwartungszeitfenstern, die sich bezüglich zumindest eines der Erwartungszeitfenster von den Erwartungszeitfenstern der besagten einen Gruppe unterscheiden, ein NICHT-Ereignis zuzuordnen ist, und
- erst dann eine Fehlermeldung auslöst, wenn das Verhältnis aus NICHT-Ereignissen zur Anzahl N einen zweiten Schwellwert, der kleiner ist als der erste Schwellwert, überschreitet.

Hierbei wird also die erfindungsgemäße Verschärfung der Anforderungen an die Funktionstüchtigkeit des Prozessors durch sowohl Verringerung des zulässigen Maximalmaßes von NICHT-Antworten im Verhältnis zur Anzahl betrachteter Erwartungszeitfenster, nämlich von einem ersten Schwellwert zu einem niedrigeren zweiten Schwellwert (als auch durch Erhöhung der Anzahl N gegenüber der Anzahl M) der vorherigen Gruppe von jeweils zu betrachtender Erwartungszeitfenster erreicht.

Sofern der Fall eintritt, dass das Verhältnis aus der Anzahl von GUT-Ereignissen zur Anzahl M oder das Verhältnis aus der Anzahl von NICHT-Ereignissen zur Anzahl M gleich dem ersten Schwellwert ist, kann der Watchdog, falls gewünscht, dies dem Prozessor sozusagen als "Warnung" oder "Hinweis" mitteilen, um dann ggfs. mit einer der verschärften Anforderungen an die Bejahung der Funktionstüchtigkeit des Prozessors fortzufahren.

In weiterer vorteilhafter Ausgestaltung der Erfindung gemäß jeder der zuvor genannten Varianten der erfindungsgemäßen Verfahren kann vorgesehen sein, dass dann, wenn der Watchdog bei Untersuchung der Informationen, die der Prozessor in der anderen Gruppe von Erwartungszeitfenstern an den Watchdog liefert, keine Fehlermeldung auslöst, der Schwellwert für die Untersuchung einer weiteren, ggfs. der folgenden oder einer der folgenden Gruppen von Erwartungszeitfenstern, die sich bezüglich mindestens eines der Erwartungszeitfenster von der besagten anderen Gruppe unterscheidet, wieder der erste Schwellwert ist und/oder die Anzahl an Erwartungszeitfenstern dieser weiteren Gruppe wieder M ist. Diese Weiterbildung beschreibt die Bedingungen, unter denen nach einer Verschärfung der Anforderungen an die Bejahung der Funktionstüchtigkeit des Prozessors wieder auf die ursprünglich vorgegebenen Kriterien zurückgekehrt wird.

In weiterer zweckmäßiger Ausgestaltung der Erfindung kann vorgesehen sein, dass die Anzahl der Erwartungszeitfenster einer Gruppe, die für die Untersuchung, zugrunde gelegt werden, ob eine Fehlermeldung auszulösen ist, um dasjenige Erwartungszeitfenster oder um die Anzahl derjenigen aufeinanderfolgenden Erwartungszeitfenster verringert wird, dem oder denen vom Watchdog jeweils ein NICHT-Ereignis zugeordnet wird und an das oder an die sich ein Erwartungszeitfenster anschließt, dem vom Watchdog deshalb ein GUT-Ereignis zugeordnet wird, weil der Watchdog von dem Prozessor eine Information oder zumindest eine Information erhält, die der Watchdog in dem vorherigen, mit NICHT-Ereignis bewerteten Erwartungszeitfenster oder in dem ersten der vorherigen, jeweils mit NICHT-Ereignis bewerteten Erwartungszeitfenstern zur Bewertung als GUT-Ereignis erwartet hatte. Bei dieser Variante der Erfindung erfolgt also eine Reduktion der Anzahl der zu bewertenden Erwartungszeitfenstern, und zwar bei gleichbleibendem Schwellwert für das Verhältnis aus GUT-Ereignissen bzw. NICHT-Ereignissen zur Anzahl der Erwartungszeitfenster, wenn bei gleicher Fragestellung auf ein Erwartungszeitfenster (oder mehrere Erwartungszeitfenster), das bzw. die als NICHT-Ereignis zu bewerten ist/sind, ein Erwartungszeitfenster mit GUT-Ereignis folgt. Man könnte in einem solchen Fall eine neue Gruppe von M Erwartungszeitfenstern betrachten bzw. eine Gruppe von anderen Erwartungszeitfenstern als denjenigen der vorherigen Gruppe betrachten, und zwar ganz unabhängig davon, ob zu diesem Zeitpunkt die Bedingung für die Nicht-Auslösung einer Fehlermeldung o.dgl. Fehlerreaktion erfüllt ist oder nicht.

In einer alternativen Ausgestaltung der zuvor genannten Vorgehensweise ist vorgesehen, dass für den Fall, dass sich innerhalb einer Gruppe von M Erwartungszeitfenstern an ein Erwartungszeitfenster oder an mehrere aufeinanderfolgende Erwartungszeitfenster, dem oder denen von dem Watchdog jeweils ein NICHT-Ereignis zugeordnet wird, ein Erwartungszeitfenster anschließt, dem von dem Watchdog deshalb ein GUT-Ereignis zugeordnet wird, weil der Watchdog von dem Prozessor eine Information oder zumindest eine Information erhält, die der Watchdog für das vorherige mit NICHT-Ereignis bewertete Erwartungszeitfenster oder für das erste der vorherigen, jeweils mit NICHT-Ereignis bewerteten Erwartungszeitfenstern zur Bewertung als GUT-Ereignis erwartet hatte, mit einem anderen Erwartungszeitfenster, ggfs. mit dem folgenden oder mit einem der folgenden, z.B. mit dem übernächsten Erwartungszeitfenster beginnend eine Gruppe von Erwartungszeitfenstern definiert wird, wobei die Anzahl von Erwartungszeitfenstern von Gruppe zu Gruppe gleich oder unterschiedlich gewählt wird. Hier erfolgt der Abbruch der Untersuchung der Erwartungszeitfenster einer Gruppe, wenn bei gleicher Fragestellung auf ein oder mehrere Erwartungszeitfenster mit NICHT-Ereignis ein Erwartungszeitfenster mit GUT-Ereignis folgt.

Beide zuvor genannten Alternativen haben den Vorteil, dass relativ schnell eine nächste Gruppe von M Erwartungszeitfenstern untersucht wird, was mit dem Vorteil verbunden sein kann, Fehlfunktionen oder Funktionsuntüchtigkeiten bzw. Funktionsauffälligkeiten des Prozessors eher zu detektieren.

In zweckmäßiger Weiterbildung der Erfindung sämtlicher zuvor genannter Varianten und Weiterbildungen kann vorgesehen sein,
- dass die Information oder Informationen, die der Watchdog von dem Prozessor erhält, an den Watchdog auf Initiative des Prozessors übermittelt wird oder werden, und zwar z. B. durch Abarbeitung von dem Watchdog bekannten Instruktionen durch den Prozessor in einer dem Watchdog bekannten Reihenfolge zu jeweiligen, dem Watchdog ebenfalls bekannten Zeiten, oder
- dass die Information oder Informationen, die der Watchdog von dem Prozessor erhält, von dem Prozessor an den Watchdog als Reaktion auf eine von dem Watchdog an den Prozessor gerichtete Anfrage übermittelt wird.

Bei einer weiteren Ausgestaltung der Erfindung kann vorgesehen sein, dass der Watchdog von dem Prozessor oder von einer anderen Einheit oder aus einem Speicher zumindest einmalig Daten über den Beginn und das Ende des jeweiligen Erwartungszeitfensters erhält.

Schließlich kann es ferner von Vorteil sein, wenn jeweils aufeinanderfolgende Erwartungszeitfenster durch ein Intervall voneinander getrennt sind oder wenn das Ende eines Erwartungszeitfensters den Beginn des folgenden Erwartungszeitfensters definiert oder mit dem Beginn des folgenden Erwartungszeitfensters zusammenfällt.

Schließlich ist es auch möglich, dergestalt zu verfahren, dass mit der Untersuchung einer anderen Gruppe von Erwartungszeitfenstern fortgefahren wird, wenn bei der sequenziellen Zuordnung der Erwartungszeitfenster einer Gruppe als GUT-Ereignis oder als NICHT-Ereignis erkannt wird, dass bezogen auf die aktuelle Gruppe von Erwartungszeitfenstern eine Fehlermeldung nicht auszulösen ist. Sobald also festgestellt wird, dass keine Fehlermeldung ausgelöst werden wird, könnte die Untersuchung einer Gruppe beendet werden und mit der Untersuchung einer anderen Gruppe fortgefahren werden, um möglichst schnell potentielle Fehler zu erkennen.

Alternativ kann auch dergestalt verfahren werden, dass mit der Untersuchung einer anderen Gruppe von Erwartungszeitfenstern fortgefahren wird, wenn bei der sequenziellen Zuordnung der Erwartungszeitfenster einer Gruppe als GUT-Ereignis oder als NICHT-Ereignis erkannt wird, dass bezogen auf die aktuelle Gruppe von Erwartungszeitfenstern eine Fehlermeldung auszulösen ist. Sobald also erkannt wird, dass eine Fehlermeldung auszulösen ist, kann die Untersuchung einer Gruppe beendet werden, um möglichst schnell eine andere Gruppe von Erwartungszeitfenstern mit ggfs. verschärften Anforderungen an die Bejahung der Funktionstüchtigkeit des Prozessors zu untersuchen.

Wie bereits oben erwähnt, kann es für den Fall, dass der Watchdog pro Erwartungszeitfenster vom Prozessor eine einzige Information erwartet, der Watchdog dann, wenn er für ein Erwartungszeitfenster mehrere Informationen empfängt, dem Erwartungszeitfenster dann ein GUT-Ereignis zuordnet, wenn der Watchdog von den mehreren Informationen zumindest eine Information als GUT-Ereignis bewertet.

Typischerweise liefert der Watchdog Informationen als Binärdaten, wobei es zweckmäßig ist, dass eine vollständige Information Binärdaten in einem vorgegebenen Datenformat mit Anfang- sowie Ende-Daten und einer vergebenen Anzahl von Informationsbits und ggf. Prüfsummen-Binärdaten zur Überprüfung der Integrität der Anzahl von Informationsbits enthält.

Von Vorteil kann es ferner sein, wenn der Prozessor und der Watchdog von Zeit zu Zeit nach einem GUT-Ereignis oder nach jedem GUT-Ereignis hinsichtlich des Startzeitpunkts des folgenden Erwartungszeitfensters synchronisiert werden.

Bei einer weiteren Variante der Erfindung kann der Prozessor die von dem Watchdog empfangenen Informationen und/oder die durch den Watchdog vorgenommenen Bewertungen dieser Informationen zur Überprüfung der Funktionalität des Watchdog erhalten und in Abhängigkeit von dem Ergebnis der Überprüfung eine einen Fehler anzeigende Reaktion auslösen z. B. eine Warnmeldung ausgeben.

Zur Lösung der oben genannten Aufgabe wird mit der Erfindung ferner alternativ ein Verfahren zur Überprüfung der Funktion eines Prozessors durch einen Watchdog vorgeschlagen, wobei bei diesem Verfahren
- der Watchdog von dem Prozessor erhaltene Information hinsichtlich Inhalts und Zeitraums des Empfangs der Information bewertet,
- der Watchdog
   - eine von dem Prozessor erhaltene Information als GUT-Ereignis bewertet, wenn sowohl die Information inhaltlich korrekt ist als auch der Watchdog diese inhaltlich korrekte Information innerhalb eines vorgegebenen Erwartungszeitfensters empfängt,
      und
   - eine von dem Prozessor erhaltene Information als NICHT-Ereignis bewertet, wenn die Information inhaltlich falsch ist oder ausbleibt und/oder wenn der Watchdog eine inhaltlich falsche Information oder eine inhaltlich richtige Information außerhalb eines vorgegebenen Erwartungszeitfensters, also zeitlich vor oder nach dem Erwartungszeitfenster, empfängt,
- der Watchdog nur dann eine Fehlermeldung auslöst, wenn der Watchdog die Information, die der Watchdog vom Prozessor in M sequenziellen Erwartungszeitfenstern, mit M als natürliche Zahl größer als 1, jeweils empfängt, mehr als N Mal, mit N kleiner als M, als NICHT-Ereignis bewertet, und/oder
- der Watchdog dann keine Fehlermeldung auslöst, wenn der Watchdog innerhalb von M sequentiellen Erwartungszeitfenstern eine vorgegebene Mindestanzahl von K GUT-Ereignissen erkennt, mit K kleiner als oder gleich M.

Sinngemäß wird also auch in dieser Alternative mit der Erfindung vorgeschlagen, nicht jede falsche Reaktion bzw. Aktion des Prozessors, die dem Watchdog gemeldet wird, sogleich für die Auslösung einer Fehlermeldung durch den Watchdog heranzuziehen. Mit "Fehlermeldung" ist ganz allgemein gemeint, dass der Watchdog eine Signalisierung zum Anzeigen einer "Auffälligkeit" des Prozessors initiiert. Die Initiierung und die Folgen einer derartigen Signalisierung sind applikationsabhängig und sollen daher hier nicht weiter behandelt werden.

Entscheidend ist, dass das, was der Watchdog innerhalb eines vorgegebenen Erwartungszeitfensters vom Prozessor an Information empfängt, entweder als GUT-Ereignis oder als NICHT-Ereignis bewertet wird. Der Watchdog bewertet die vom Prozessor erhaltene Information hinsichtlich ihrer Vollständigkeit, ihres Inhalts und des zeitlichen Empfangs (Empfangszeitraum). Der Watchdog erwartet also eine Information vom Prozessor innerhalb eines vorgegebenen Erwartungszeitfensters. Sofern die Information formal und inhaltlich korrekt ist und innerhalb des Erwartungszeitfensters eintrifft, bewertet der Watchdog dies als GUT-Ereignis. Erreichen den Watchdog mehrere Informationen (,wobei er an sich nur eine einzige erwartet), so reicht es ggfs. aus, dass eine (oder mehrere) dieser Informationen als GUT-Ereignis zu bewerten ist.

Ein wesentlicher Vorteil der Erfindung ist also darin zu sehen, dass ein durch ein Einzelereignis gestörter Ablauf in einem Prozessor toleranter bewertet wird. Eine zeitbedingt inhaltlich obsolet gewordene Antwort des Prozessors an den Watchdog kann innerhalb eines vorliegenden Bewertungszeitraumes korrigiert werden. Der wiederhergestellte Ablauf im Prozessor würde dadurch nachträglich gegenüber dem Watchdog dokumentiert.

Sollte dagegen eine der beiden zuvor genannten Bedingungen nicht eingehalten sein, so schließt der Watchdog daraus nicht etwa sogleich auf ein SCHLECHT-Ereignis. Vielmehr bewertet der Watchdog dies als NICHT-Ereignis. Sollte der Watchdog innerhalb eines Erwartungszeitfensters mehrere Informationen vom Prozessor erhalten, so wird dies ebenfalls nicht (zwingend) als SCHLECHT-Ereignis bewertet, sondern als NICHT-Ereignis. Dies gilt ggfs. auch dann, wenn eine oder mehrere Informationen die Kriterien für ein GUT-Ereignis erfüllt/erfüllen, was eine zur zuvor genannten Implementierung alternative Möglichkeit ist.

Wenn der Watchdog über mehrere Erwartungszeitfenster betrachtet mehr als eine vorgegebene Anzahl von NICHT-Ereignissen detektiert hat, wird eine FehlerMeldung initiiert. Dabei kommt es nicht notwendigerweise darauf an, dass diese mehreren NICHT-Ereignisse in einem bestimmten Muster sequentiell auftreten. So kann beispielsweise vorgesehen sein, dass zwei oder mehr direkt aufeinander folgende NICHT-Ereignisse zur Auslösung einer Fehlermeldung führen. Es ist aber auch möglich, dass ein NICHT-Ereignis in dem Augenblick negiert wird, in dem auf dieses NICHT-Ereignis ein oder mehrere GUT-Ereignisse aufeinanderfolgend eintreten. Auf diese Weise kann also das Auftreten eines NICHT-Ereignisses durch ein oder mehrere anschließend eintreffende GUT-Ereignisse "kompensiert" werden. Die konkrete Ausgestaltung, mit welchem Szenario innerhalb einer Gruppe von M sequentiellen Erwartungszeitfenstern (mit M als natürliche Zahl größer 1) ein NICHT-Ereignis oder mehr als ein NICHT-Ereignis eintreffen, damit eine Fehlermeldung oder (noch nicht) ausgelöst wird, ist ebenfalls applikationsabhängig.

Für die Erfindung von besonderer Bedeutung ist, dass im Watchdog grundsätzlich nur die GUT-Ereignisse berücksichtigt werden. Sämtliche anderen Ereignisse sind nicht automatisch als SCHLECHT-Ereignisse zu bewerten bzw. zu berücksichtigen. Der Watchdog jedenfalls arbeitet auf seiner Ebene dergestalt, dass er ein nicht als GUT-Ereignis zu bewertendes Ereignis nicht sogleich als SCHLECHT-Ereignis bewertet. Das wiederum bleibt einer übergeordneten Protokollebene vorbehalten, was die Möglichkeiten der Anpassung des erfindungsgemäß eingesetzten Watchdog an die jeweilige Applikation deutlich erweitert.

Bei einer Variante der Erfindung löst der Watchdog jedenfalls dann keine Fehlermeldung aus, wenn der Watchdog innerhalb von M sequentiellen Erwartungszeitfenstern eine vorgegebene Mindestanzahl von K GUT-Ereignissen erkennt, mit K kleiner als oder gleich M.

Sämtliche Konstellationen von Information und Empfangszeitpunkt, die außerhalb dessen liegen, was der Watchdog als GUT-Ereignis bewertet, ist also nicht sogleich ein Fehler, sondern wird vom Watchdog als NICHT-Ereignis bewertet und damit primär verworfen. Hierzu gehören inhaltlich falsche Informationen, die jedoch innerhalb eines Erwartungszeitfensters eintreffen, das Ausbleiben des Eintreffens von Information innerhalb eines Erwartungszeitfensters, das Eintreffen von Information innerhalb eines einzelnen Erwartungszeitfensters, obwohl die eintreffende Information auf mehrere Erwartungszeitfenster verteilt hätte eintreffen müssen, usw.

Wie oben beschrieben, erhält der Watchdog vom Prozessor Informationen, die der Watchdog zur Bewertung der Funktionstüchtigkeit des Prozessors auswertet. Diese Information kann auf Initiative des Prozessors an den Watchdog übermittelt werden. Dabei ist es auch möglich, dass der Prozessor zuvor von außen angeregt worden ist, die besagte Information zur besagten Zeit an den Watchdog zu übermitteln. Entspricht der Inhalt und der Empfangszeitpunkt der Information nicht den Erwartungen und dem Erwartungszeitfenster, liegt ein NICHT-Ereignis vor.

Es ist aber auch möglich, dass der Watchdog von sich aus den Prozessor auffordert, Information an den Watchdog zu übermitteln. Der vom Watchdog erwartete Inhalt der Information sowie der vom Watchdog erwartete Empfangszeitpunkt der Information kann vom Inhalt der Anfrage des Watchdog an den Prozessor oder aber auch von dem Zeitpunkt abhängig gesteuert sein, zu dem der Watchdog den Prozessor befragt. Auch kann der Inhalt und der Zeitpunkt des Empfangs davon abhängig sein, die wievielte Anfrage der Watchdog an den Prozessor richtet. Entscheidend ist, dass der Watchdog jeweils "weiß", welche Information er zu welchem Empfangszeitpunkt vom Prozessor zu erwarten hat.

Mit anderen Worten ist also gemäß einer Ausführungsform der Erfindung vorgesehen, dass die Information, die der Watchdog vom Prozessor erhält, an den Watchdog auf Initiative des Prozessors übermittelt wird. Dabei kann auch vorgesehen sein, dass der Watchdog eine Information über den Beginn und das Ende des jeweiligen Erwartungszeitfensters von dem Prozessor oder von einer externen anderen Einheit erhält.

Alternativ kann bei einer entsprechenden Weiterbildung der Erfindung vorgesehen sein, dass die Information, die der Watchdog von dem Prozessor erhält, von dem Prozessor an den Watchdog als Reaktion auf eine von dem Watchdog an den Prozessor gerichtete Anfrage übermittelt wird. Hierbei ist es denkbar und von Vorteil, wenn der Beginn und das Ende des jeweiligen Erwartungszeitfensters von dem Watchdog oder von extern definiert wird.

Wie bereits oben beschrieben, wird erfindungsgemäß eine Gruppe von M direkt oder mit zeitlichem Abstand aufeinanderfolgenden Empfangszeitfenstern betrachtet und für die Auslösung einer Fehlermeldung untersucht, ob einer vorgegebenen Mindestanzahl von Erwartungszeitfenstern dieser Gruppe von M Erwartungszeitfenstern kein GUT-Ereignis zugeordnet werden kann. Ist diese Anzahl von NICHT-Ereignissen erreicht, bevor sämtliche M sequenziellen Erwartungszeitfenster durchgelaufen sind, so kann bereits eine Fehlermeldung initiiert werden. Es ist aber auch möglich, dass mit dem Auslösen der Fehlermeldung abgewartet wird, bis sämtliche M sequenziellen Erwartungszeitfenster durchgelaufen sind.

In Weiterbildung der Erfindung kann auch vorgesehen sein, dass ein NICHT-Ereignis für die Auslösung einer Fehlermeldung nicht berücksichtigt wird, wenn auf das Erwartungszeitfenster, dem von dem Watchdog das NICHT-Ereignis zugeordnet wird, ein Erwartungszeitfenster folgt, dem vom Watchdog ein GUT-Ereignis zugeordnet wird.

Es ist gemäß verschiedenen Ausgestaltungen der Erfindung möglich, jeweils feste Gruppen von jeweils M sequenziellen Erwartungszeitfenstern zu untersuchen, ob ein GUT-Ereignis oder ein NICHT-Ereignis vorliegt. Man kann aber ebenso auch die Gruppe von M sequenziellen Erwartungszeitfenstern "dynamisch" definieren, indem die M Erwartungszeitfenster dann, wenn innerhalb dieser Gruppe von Erwartungszeitfenstern auf ein NICHT-Ereignis ein GUT-Ereignis folgt, mit dem nächsten oder mit einem der nächsten, z.B. mit dem übernächsten Erwartungszeitfenster beginnend eine Gruppe von M nächsten Erwartungszeitfenstern definiert wird. Auch kann die Anzahl von pro Gruppe zu betrachtenden Erwartungszeitfenstern variieren.

### LISTE DES STANDES DER TECHNIK

DE-C-10 056 408
DE-B-10 2006 028 992
DE-A-10 2004 009 359
DE-A-42 34 910
DE-A-10 2016 015 756
WO-A-2011/072662
WO-A-2018/050908
US-A-4594685
US-A-2004/0172580

## Patentansprüche

1. Verfahren zur Überprüfung der Funktion eines Prozessors durch einen Watchdog, wobei bei dem Verfahren
- der Watchdog von dem Prozessor erhaltene Information hinsichtlich sowohl der Vollständigkeit und des Inhalts der Information als auch des Empfangs der Information innerhalb eines vorgegebenen Erwartungszeitfensters bewertet,
- der Watchdog
- einem Erwartungszeitfenster ein GUT-Ereignis zuordnet, wenn die einzige Information oder zumindest eine der Informationen, die der Watchdog für ein Erwartungszeitfenster von dem Prozessor erhält, als sowohl vollständig und inhaltlich korrekt als auch zeitlich korrekt empfangen zu bewerten ist,
und
- einem Erwartungszeitfenster ein NICHT-Ereignis zuordnet, wenn der Watchdog keine Information empfängt oder wenn die einzige Information oder sämtliche Informationen, die der Watchdog für ein Erwartungszeitfenster von dem Prozessor erhält, nicht als vollständig und/oder nicht als inhaltlich korrekt und/oder nicht als zeitlich korrekt empfangen zu bewerten ist bzw. sind,
- der Watchdog untersucht, wie vielen Erwartungszeitfenstern und ggfs. welchen Erwartungszeitfenstern einer Gruppe aus M ggfs. aufeinanderfolgenden Erwartungszeitfenstern ein GUT-Ereignis zuzuordnen ist, und
- der Watchdog eine Fehlermeldung auslöst, wenn für eine Gruppe von M Erwartungszeitfenstern das Verhältnis aus GUT-Ereignissen zur Anzahl M einen vorgegebenen ersten Schwellwert unterschreitet,
**dadurch gekennzeichnet,**
- **dass** der Watchdog dann, wenn für mindestens eine Gruppe von M Erwartungszeitfenstern das Verhältnis aus GUT-Ereignissen zur Anzahl M gleich dem vorgegebenen ersten Schwellwert ist,
- entweder untersucht,
- wie vielen Erwartungszeitfenstern und ggfs. welchen Erwartungszeitfenstern einer anderen Gruppe, ggfs. der folgenden oder einer der folgenden Gruppen aus M ggfs. aufeinanderfolgenden Erwartungszeitfenstern, die sich bezüglich zumindest eines der Erwartungszeitfenster von den Erwartungszeitfenstern der besagten einen Gruppe unterscheiden, ein GUT-Ereignis zuzuordnen ist, und erst dann eine Fehlermeldung auslöst, wenn das Verhältnis aus diesen GUT-Ereignissen zur Anzahl M einen zweiten Schwellwert, der größer ist als der erste Schwellwert, unterschreitet,
- oder untersucht,
- wie vielen Erwartungszeitfenstern und ggfs. welchen Erwartungszeitfenstern einer anderen, ggfs. der folgenden oder einer der folgenden Gruppen aus N, mit N<M, ggfs. aufeinanderfolgenden Erwartungszeitfenstern, die sich bezüglich zumindest eines der Erwartungszeitfenster von den Erwartungszeitfenstern der besagten einen Gruppe unterscheiden, ein GUT-Ereignis zuzuordnen ist, und erst dann eine Fehlermeldung auslöst, wenn das Verhältnis aus GUT-Ereignissen zur Anzahl N einen zweiten Schwellwert, der größer ist als der erste Schwellwert, unterschreitet.

2. Verfahren zur Überprüfung der Funktion eines Prozessors durch einen Watchdog, wobei bei dem Verfahren
- der Watchdog von dem Prozessor erhaltene Information hinsichtlich sowohl der Vollständigkeit und des Inhalts der Information als auch des Empfangs der Information innerhalb eines vorgegebenen Erwartungszeitfensters bewertet,
- der Watchdog
- einem Erwartungszeitfenster ein GUT-Ereignis zuordnet, wenn die einzige Information oder zumindest eine der Informationen, die der Watchdog für ein Erwartungszeitfenster von dem Prozessor erhält, als sowohl vollständig und inhaltlich korrekt als auch zeitlich korrekt empfangen zu bewerten ist,
und
- einem Erwartungszeitfenster ein NICHT-Ereignis zuordnet, wenn der Watchdog keine Information empfängt oder wenn die einzige Information oder sämtliche Informationen, die der Watchdog für ein Erwartungszeitfenster von dem Prozessor erhält, nicht als vollständig und/oder nicht als inhaltlich korrekt und/oder nicht als zeitlich korrekt empfangen zu bewerten ist bzw. sind,
- der Watchdog untersucht, wie vielen Erwartungszeitfenstern und ggfs. welchen Erwartungszeitfenstern einer Gruppe aus M ggfs. aufeinanderfolgenden Erwartungszeitfenstern ein NICHT-Ereignis zuzuordnen ist, und
- der Watchdog eine Fehlermeldung auslöst, wenn für eine Gruppe von M Erwartungszeitfenstern das Verhältnis aus NICHT-Ereignissen zur Anzahl M einen vorgegebenen ersten Schwellwert überschreitet,
**dadurch gekennzeichnet,**
- **dass** der Watchdog dann, wenn für mindestens eine Gruppe von M Erwartungszeitfenstern das Verhältnis aus NICHT-Ereignissen zur Anzahl M gleich dem vorgegebenen ersten Schwellwert ist,
- entweder untersucht,
- wie vielen Erwartungszeitfenstern und ggfs. welchen Erwartungszeitfenstern einer anderen, ggfs. der folgenden oder einer der folgenden Gruppen aus M ggfs. aufeinanderfolgenden Erwartungszeitfenstern, die sich bezüglich zumindest eines der Erwartungszeitfenster von den Erwartungszeitfenstern der einen besagten Gruppe unterscheiden, ein NICHT-Ereignis zuzuordnen ist, und erst dann eine Fehlermeldung auslöst, wenn das Verhältnis aus NICHT-Ereignissen zur Anzahl M einen zweiten Schwellwert, der kleiner ist als der erste Schwellwert, überschreitet,
- oder untersucht,
- wie vielen Erwartungszeitfenstern und ggfs. welchen Erwartungszeitfenstern einer anderen, ggfs. der folgenden oder eine der folgenden Gruppen aus N, mit N<M, ggfs. aufeinanderfolgenden Erwartungszeitfenstern, die sich bezüglich zumindest eines der Erwartungszeitfenster von den Erwartungszeitfenstern der besagten einen Gruppe unterscheiden, ein NICHT-Ereignis zuzuordnen ist, und erst dann eine Fehlermeldung auslöst, wenn das Verhältnis aus NICHT-Ereignissen zur Anzahl N einen zweiten Schwellwert, der kleiner ist als der erste Schwellwert, überschreitet.

3. Verfahren nach Anspruch 1 oder 2, **dadurch gekennzeichnet, dass** dann, wenn der Watchdog bei Untersuchung der Informationen, die der Prozessor in der anderen Gruppe von Erwartungszeitfenstern an den Watchdog liefert, keine Fehlermeldung auslöst, der Schwellwert für die Untersuchung einer weiteren, ggfs. der folgenden oder einer der folgenden Gruppen von Erwartungszeitfenstern, die sich bezüglich mindestens eines der Erwartungszeitfenster von der besagten anderen Gruppe unterscheidet, wieder der erste Schwellwert ist und/oder die Anzahl an Erwartungszeitfenstern dieser weiteren Gruppe wieder M ist.

4. Verfahren nach einem der Ansprüche 1 bis 3, **dadurch gekennzeichnet, dass** die Anzahl der Erwartungszeitfenster einer Gruppe, die für die Untersuchung, zugrunde gelegt werden, ob eine Fehlermeldung auszulösen ist, um dasjenige Erwartungszeitfenster oder um die Anzahl derjenigen aufeinanderfolgenden Erwartungszeitfenster verringert wird, dem oder denen vom Watchdog jeweils ein NICHT-Ereignis zugeordnet wird und an das oder an die sich ein Erwartungszeitfenster anschließt, dem vom Watchdog deshalb ein GUT-Ereignis zugeordnet wird, weil der Watchdog von dem Prozessor eine Information oder zumindest eine Information erhält, die der Watchdog in dem vorherigen, mit NICHT-Ereignis bewerteten Erwartungszeitfenster oder in dem ersten der vorherigen, jeweils mit NICHT-Ereignis bewerteten Erwartungszeitfenstern zur Bewertung als GUT-Ereignis erwartet hatte.

5. Verfahren nach einem der Ansprüche 1 bis 4, **dadurch gekennzeichnet, dass** für den Fall, dass sich innerhalb einer Gruppe von M Erwartungszeitfenstern an ein Erwartungszeitfenster oder an mehrere aufeinanderfolgende Erwartungszeitfenster, dem oder denen von dem Watchdog jeweils ein NICHT-Ereignis zugeordnet wird, ein Erwartungszeitfenster anschließt, dem von dem Watchdog deshalb ein GUT-Ereignis zugeordnet wird, weil der Watchdog von dem Prozessor eine Information oder zumindest eine Information erhält, die der Watchdog für das vorherigen mit NICHT-Ereignis bewertete Erwartungszeitfenster oder für das erste der vorherigen, jeweils mit NICHT-Ereignis bewerteten Erwartungszeitfenstern zur Bewertung als GUT-Ereignis erwartet hatte, mit einem anderen Erwartungszeitfenster, ggfs. mit dem folgenden oder mit einem der folgenden, z.B. mit dem übernächsten Erwartungszeitfenster beginnend eine Gruppe von Erwartungszeitfenstern definiert wird, wobei die Anzahl von Erwartungszeitfenstern von Gruppe zu Gruppe gleich oder unterschiedlich gewählt wird.

6. Verfahren nach einem der Ansprüche 1 bis 5, **dadurch gekennzeichnet,**
- **dass** die Information oder Informationen, die der Watchdog von demProzessor erhält, an den Watchdog auf Initiative des Prozessors übermittelt wird oder werden, und zwar z. B. durch Abarbeitung von dem Watchdog bekannten Instruktionen durch den Prozessor in einer dem Watchdog bekannten Reihenfolge zu jeweiligen, dem Watchdog ebenfalls bekannten Zeiten,
oder
- **dass** die Information oder Informationen, die der Watchdog von dem Prozessor erhält, von dem Prozessor an den Watchdog als Reaktion auf eine von dem Watchdog an den Prozessor gerichtete Anfrage übermittelt wird.

7. Verfahren nach einem der Ansprüche 1 bis 6, **dadurch gekennzeichnet, dass** der Watchdog von dem Prozessor oder von einer anderen Einheit oder aus einem Speicher zumindest einmalig Daten über den Beginn und das Ende des jeweiligen Erwartungszeitfensters erhält und/oder, dass jeweils aufeinanderfolgende Erwartungszeitfenster durch ein Intervall voneinander getrennt sind oder dass das Ende eines Erwartungszeitfensters den Beginn des folgenden Erwartungszeitfensters definiert oder mit dem Beginn des folgenden Erwartungszeitfensters zusammenfällt.

8. Verfahren nach einem der Ansprüche 1 bis 7, **dadurch gekennzeichnet, dass** mit der Untersuchung einer anderen Gruppe von Erwartungszeitfenstern fortgefahren wird, wenn bei der sequenziellen Zuordnung der Erwartungszeitfenster einer Gruppe als GUT-Ereignis oder als NICHT-Ereignis erkannt wird, dass bezogen auf die aktuelle Gruppe von Erwartungszeitfenstern eine Fehlermeldung nicht auszulösen ist oder, dass mit der Untersuchung einer anderen Gruppe von Erwartungszeitfenstern fortgefahren wird, wenn bei der sequenziellen Zuordnung der Erwartungszeitfenster einer Gruppe als GUT-Ereignis oder als NICHT-Ereignis erkannt wird, dass bezogen auf die aktuelle Gruppe von Erwartungszeitfenstern eine Fehlermeldung auszulösen ist.

9. Verfahren nach einem der Ansprüche 1 bis 8, **dadurch gekennzeichnet, dass** der Watchdog pro Erwartungszeitfenster vom Prozessor eine einzige Information erwartet und dass der Watchdog dann, wenn er für ein Erwartungszeitfenster mehrere Informationen empfängt, dem Erwartungszeitfenster dann ein GUT-Ereignis zuordnet, wenn der Watchdog von den mehreren Informationen zumindest eine Information als GUT-Ereignis bewertet.

10. Verfahren nach einem der Ansprüche 1 bis 9, **dadurch gekennzeichnet, dass** der Prozessor und der Watchdog von Zeit zu Zeit nach einem GUT-Ereignis oder nach jedem GUT-Ereignis hinsichtlich des Startzeitpunkts des folgenden Erwartungszeitfensters synchronisiert werden.

11. Verfahren nach einem der Ansprüche 1 bis 10, **dadurch gekennzeichnet, dass** der Prozessor die von dem Watchdog empfangenen Informationen und/oder die durch den Watchdog vorgenommenen Bewertungen dieser Informationen zur Überprüfung der Funktionalität des Watchdog erhält und in Abhängigkeit von dem Ergebnis der Überprüfung eine einen Fehler anzeigende Reaktion auslöst z. B. eine Warnmeldung ausgibt.

## Claims

1. A method for testing the function of a processor by a watchdog, wherein in said method
- the watchdog assesses information received from the processor with regard to both completeness and content of the information and the reception of the information within a given expectation time window,
- the watchdog
- assigns a GOOD event to an expectation time window if the only information or at least one of the information which the watchdog receives from the processor for an expectation time window is to be assessed as received both completely and correctly in terms of content as well as correctly in terms of time,
and
- assigns a NON-event to an expectation time window if the watchdog does not receive any information or if the only information or all information which the watchdog receives from the processor for an expectation time window is/are to be assessed as received both not completely and/or not correctly in terms of content and/or not correctly in terms of time,
- the watchdog examines how many expectation time windows and, if applicable, which expectation time windows of a group of M, if applicable, successive expectation time windows are to be assigned a GOOD event, and
- the watchdog triggers an error message if for at least one group of M expectation time windows the ratio of GOOD events to the number M falls below a given first threshold,
**characterized in that**
- the watchdog if, for at least one group of M expectation time windows, the ratio of GOOD events to the number M is equal to the given first threshold value,
- either examines
- how many expectation time windows and, if applicable, which expectation time windows of another group, if applicable the following or one of the following groups from M, if applicable, successive expectation time windows, which differ with respect to at least one of the expectation time windows from the expectation time windows of the said one group, are to be assigned a GOOD event, and only triggers an error message if the ratio of these GOOD events to the number M falls below a second threshold value which is greater than the first threshold value,
- or examines
- how many expectation time windows and, if applicable, which expectation time windows of another group, if applicable the following or one of the following groups from N, with N<M, if applicable, successive expectation time windows, which differ with respect to at least one of the expectation time windows from the expectation time windows of the said one group, are to be assigned a GOOD event, and only triggers an error message if the ratio of these GOOD events to the number N falls below a second threshold value which is greater than the first threshold value.

2. The method for testing the function of a processor by a watchdog, wherein in said method
- the watchdog assesses information received from the processor with regard to both completeness and content of the information and the reception of the information within a given expectation time window,
- the watchdog
- assigns a GOOD event to an expectation time window if the only information or at least one of the information which the watchdog receives from the processor for an expectation time window is to be assessed as received both completely and correctly in terms of content as well as correctly in terms of time,
and
- assigns a NON-event to an expectation time window if the watchdog does not receive any information or if the only information or all information which the watchdog receives from the processor for an expectation time window is/are to be assessed as received both not completely and/or not correctly in terms of content and/or not correctly in terms of time,
- the watchdog examines how many expectation time windows and, if applicable, which expectation time windows of a group of M, if applicable, successive expectation time windows are to be assigned a NON-event, and
- the watchdog triggers an error message if for one group of M expectation time windows the ratio of NON-events to the number M falls below a given first threshold,
**characterized in that**
- the watchdog if, for at least one group of M expectation time windows, the ratio of NON-events to the number M is equal to the given first threshold value,
- either examines
- how many expectation time windows and, if applicable, which expectation time windows of another group, if applicable the following or one of the following groups from M, if applicable, successive expectation time windows, which differ with respect to at least one of the expectation time windows from the expectation time windows of the said one group, are to be assigned a NON-event, and only triggers an error message if the ratio of these NON-events to the number M falls below a second threshold value which is smaller than the first threshold value,
- or examines
- how many expectation time windows and, if applicable, which expectation time windows of another group, if applicable the following or one of the following groups from N, with N<M, if applicable, successive expectation time windows, which differ with respect to at least one of the expectation time windows from the expectation time windows of the said one group, are to be assigned a NON-event, and only triggers an error message if the ratio of these NON-events to the number N falls below a second threshold value which is smaller than the first threshold value.

3. The method according to claim 1 or 2, **characterized in that**, if the watchdog does not trigger an error message when examining the information which the processor supplies to the watchdog in the other group of expectation time windows, the threshold value for examining a further, if applicable the following or one of the following groups of expectation time windows, which differs with respect to at least one of the expectation time windows from the said other group, is again the first threshold value and/or the number of expectation time windows of said further group is again M.

4. The method according to any one of claims 1 to 3, **characterized in that** the number of expectation time windows of a group which is taken as a basis for the examination as to whether an error message is to be triggered, is reduced by that expectation time window or by the number of those successive expectation time windows to which respectively a NON-event is assigned by the watchdog and which is/are followed by an expectation time window, to which a GOOD event is assigned by the watchdog because the watchdog receives from the processor one piece of information or at least one piece of information which the watchdog had expected to be evaluated as a GOOD event in the previous expectation time window evaluated with a NON-event or in the first of the previous expectation time windows each evaluated with a NON-event.

5. The method according to any one of claims 1 to 4, **characterized in that**, in the event that, within a group of M expectation time windows, one expectation time window or several successive expectation time windows, to each of which a NON-event is assigned by the watchdog, is followed by an expectation time window to which a GOOD event is assigned by the watchdog because the watchdog receives from the processor one piece of information or at least one piece of information which the watchdog had expected to be evaluated as a GOOD event in the previous expectation time window evaluated with a NON-event or in the first of the previous expectation time windows each evaluated with a NON-event, a group of expectation time windows is defined with another expectation time window, possibly with the following or with one of the following, e.g. starting with the next but one expectation time window, wherein the number of expectation time windows is selected to be the same or different from group to group.

6. The method according to any one of claims 1 to 5, **characterized in that**
- the piece of information or the information which the watchdog receives from the processor is or are transmitted to the watchdog on the initiative of the processor, for example by the processor processing instructions known to the watchdog in an order known to the watchdog at respective times also known to the watchdog,
or
- the piece of information or the information which the watchdog receives from the processor is or are transmitted to the watchdog in response to a request sent to the processor by the watchdog.

7. The method according to any one of claims 1 to 6, **characterized in that** the watchdog receives data from the processor or from another unit or from a memory at least once about the start and the end of the respective expectation time window and/or **in that** respectively successive expectation time windows are separated from one another by an interval or **in that** the end of an expectation time window defines the start of the following expectation time window or coincides with the start of the following expectation time window.

8. The method according to any one of claims 1 to 7, **characterized in that** the examination of another group of expectation time windows is continued if, during the sequential assignment of the expectation time windows of a group, it is recognized as a GOOD event or as a NON-event that an error message is not to be triggered in relation to the current group of expectation time windows or, **in that** the examination of another group of expectation time windows is continued if the sequential assignment of the expectation time windows of a group it is recognized as a GOOD event or as a NON-event that an error message is to be triggered in relation to the current group of expectation time windows.

9. The method according to any one of claims 1 to 8, **characterized in that** the watchdog expects a single piece of information from the processor per expectation time window and **in that**, if the watchdog receives several pieces of information for an expectation time window, the watchdog assigns a GOOD event to the expectation time window if the watchdog evaluates at least one piece of information from the several pieces of information as a GOOD event.

10. The method according to any one of claims 1 to 9, **characterized in that** the processor and the watchdog are synchronized from time to time after a GOOD event or after each GOOD event with regard to the start time of the following expectation time window.

11. The method according to any one of claims 1 to 10, **characterized in that** the processor receives the information received from the watchdog and/or the evaluations of this information performed by the watchdog for testing the functionality of the watchdog and, depending on the result of the test, triggers a reaction indicating an error, e.g. issues a warning message.

## Revendications

1. Procédé de vérification du fonctionnement d'un processeur par un watchdog, dans lequel procédé
- le watchdog évalue l'information obtenue du processeur aussi bien quant à l'exhaustivité et au contenu de l'information qu'à la réception de l'information à l'intérieur d'une fenêtre de temps d'attente prédéfinie,
- le watchdog
- affecte à une fenêtre de temps d'attente un événement BON si l'information unique ou au moins une des informations que le watchdog obtient du processeur pendant une fenêtre de temps d'attente doit être évaluée comme étant aussi bien complète et correcte quant à son contenu que reçue correctement dans le temps,
et
- affecte à une fenêtre de temps d'attente un événement NON si le watchdog ne reçoit pas d'information ou si l'information unique ou toutes les informations que le watchdog obtient du processeur pendant une fenêtre de temps d'attente doit ou doivent être évaluée(s) comme n'étant pas complète(s) et/ou pas correcte(s) quant à son/leur contenu et/ou pas reçue(s) correctement dans le temps,
- le watchdog recherche à combien de fenêtres de temps d'attente et éventuellement à quelles fenêtres de temps d'attente d'un groupe de M fenêtres de temps d'attente se suivant éventuellement doit être affecté un événement BON, et
- le watchdog déclenche un message d'erreur si, pendant un groupe de M fenêtres de temps d'attente, le rapport d'événements BON au nombre M passe sous une première valeur de seuil prédéfinie,
**caractérisé en ce que**
- si, pendant au moins un groupe de M fenêtres de temps d'attente, le rapport d'événements BON au nombre M est égal à la première valeur de seuil prédéfinie,
- alors le watchdog soit recherche
- à combien de fenêtres de temps d'attente et éventuellement à quelles fenêtres de temps d'attente d'un autre groupe, éventuellement des groupes suivants ou d'un des groupes suivants, de M fenêtres de temps d'attente se suivant éventuellement, qui se distinguent, en ce qui concerne au moins une des fenêtres de temps d'attente, des fenêtres de temps d'attente dudit groupe, doit être affecté un événement BON, et ne déclenche alors un message d'erreur que si le rapport de ces événements BON au nombre M passe sous une deuxième valeur de seuil qui est plus grande que la première valeur de seuil,
- soit recherche
- à combien de fenêtres de temps d'attente et éventuellement à quelles fenêtres de temps d'attente d'un autre groupe, éventuellement des groupes suivants ou d'un des groupes suivants, de N fenêtres de temps d'attente, où N < M, se suivant éventuellement, qui se distinguent, en ce qui concerne au moins une des fenêtres de temps d'attente, des fenêtres de temps d'attente dudit groupe, doit être affecté un événement BON, et ne déclenche alors un message d'erreur que si le rapport d'événements BON au nombre N passe sous une deuxième valeur de seuil qui est plus grande que la première valeur de seuil.

2. Procédé de vérification du fonctionnement d'un processeur par un watchdog, dans lequel procédé
- le watchdog évalue l'information obtenue du processeur aussi bien quant à l'exhaustivité et au contenu de l'information qu'à la réception de l'information à l'intérieur d'une fenêtre de temps d'attente prédéfinie,
- le watchdog
- affecte à une fenêtre de temps d'attente un événement BON si l'information unique ou au moins une des informations que le watchdog obtient du processeur pendant une fenêtre de temps d'attente doit être évaluée comme étant aussi bien complète et correcte quant à son contenu que reçue correctement dans le temps,
et
- affecte à une fenêtre de temps d'attente un événement NON si le watchdog ne reçoit pas d'information ou si l'information unique ou toutes informations que le watchdog obtient du processeur pendant une fenêtre de temps d'attente doit ou doivent être évaluée(s) comme n'étant pas complète (s) et/ou pas correcte (s) quant à son/leur contenu et/ou pas reçue(s) correctement dans le temps,
- le watchdog recherche à combien de fenêtres de temps d'attente et éventuellement à quelles fenêtres de temps d'attente d'un groupe de M fenêtres de temps d'attente se suivant éventuellement doit être affecté un événement NON, et
- le watchdog déclenche un message d'erreur si, pendant un groupe de M fenêtres de temps d'attente, le rapport d'événements NON au nombre M passe au-dessus d'une première valeur de seuil prédéfinie,
**caractérisé en ce que**
- si, pendant au moins un groupe de M fenêtres de temps d'attente, le rapport d'événements NON au nombre M est égal à la première valeur de seuil prédéfinie, le watchdog
- soit recherche
- à combien de fenêtres de temps d'attente et éventuellement à quelles fenêtres de temps d'attente d'un autre groupe, éventuellement des groupes suivants ou d'un des groupes suivants, de M fenêtres de temps d'attente se suivant éventuellement, qui se distinguent, en ce qui concerne au moins une des fenêtres de temps d'attente, des fenêtres de temps d'attente dudit groupe, doit être affecté un événement NON, et ne déclenche alors un message d'erreur que si le rapport d'événements NON au nombre M passe au-dessus d'une deuxième valeur de seuil qui est plus petite que la première valeur de seuil,
- soit recherche
- à combien de fenêtres de temps d'attente et éventuellement à quelles fenêtres de temps d'attente d'un autre groupe, éventuellement des groupes suivants ou d'un des groupes suivants, de N fenêtres de temps d'attente, où N < M, se suivant éventuellement, qui se distinguent, en ce qui concerne au moins une des fenêtres de temps d'attente, des fenêtres de temps d'attente dudit groupe, doit être affecté un événement NON, et ne déclenche alors un message d'erreur que si le rapport d'événements NON au nombre N passe au-dessus d'une deuxième valeur de seuil qui est plus petite que la première valeur de seuil.

3. Procédé selon la revendication 1 ou 2, **caractérisé en ce que**, quand le watchdog, lors de la recherche des informations que le processeur fournit au watchdog dans l'autre groupe de fenêtres de temps d'attente, ne déclenche pas de message d'erreur, la valeur de seuil pour la recherche d'un autre groupe, éventuellement des groupes suivants ou d'un des groupes suivants de fenêtres de temps d'attente qui, en ce qui concerne au moins une des fenêtres de temps d'attente, se distingue dudit autre groupe, est de nouveau la première valeur de seuil et/ou le nombre de fenêtres de temps d'attente de cet autre groupe est de nouveau M.

4. Procédé selon l'une des revendications 1 à 3, **caractérisé en ce que** le nombre de fenêtres de temps d'attente d'un groupe qui ont été prises comme base pour la recherche décidant si un message d'erreur doit être déclenché est diminué de la fenêtre de temps d'attente ou du nombre des fenêtres de temps d'attente se suivant à laquelle ou auxquelles un événement NON est respectivement affecté par le watchdog et à laquelle ou auxquelles se rattache une fenêtre de temps d'attente à laquelle un événement BON est affecté par le watchdog parce que le watchdog obtient du processeur une information ou au moins une information que le watchdog avait attendue pour l'évaluation en tant qu'événement BON dans la fenêtre de temps d'attente précédente évaluée avec un événement NON ou dans la première des fenêtres de temps d'attente précédentes évaluées respectivement avec un événement NON.

5. Procédé selon l'une des revendications 1 à 4, **caractérisé en ce que**, au cas où, à l'intérieur d'un groupe de M fenêtres de temps d'attente, une fenêtre de temps d'attente se rattache à une fenêtre de temps d'attente ou à plusieurs fenêtres de temps d'attente qui se suivent et à laquelle ou auxquelles respectivement un événement NON est affecté par le watchdog, et à laquelle fenêtre de temps un événement BON est affecté par le watchdog parce que le watchdog obtient du processeur une information ou au moins une information que le watchdog avait attendue pour l'évaluation en tant qu'événement BON pendant la fenêtre de temps d'attente précédente évaluée avec un événement NON ou pendant la première des fenêtres de temps d'attente précédentes respectivement évaluées avec un événement NON, commençant avec une autre fenêtre de temps d'attente, éventuellement avec la fenêtre de temps d'attente suivante ou avec une des fenêtres de temps d'attente suivantes, par ex. avec la fenêtre de temps d'attente qui vient immédiatement après, un groupe de fenêtres de temps d'attente est défini, le nombre de fenêtres de temps d'attente étant choisi identique ou différent de groupe à groupe.

6. Procédé selon l'une des revendications 1 à 5, **caractérisé en ce que**
- l'information ou des informations que le watchdog obtient du processeur est ou sont transmis(es) au watchdog à l'initiative du processeur, et cela par ex. par l'exécution par le processeur d'instructions connues du watchdog selon une séquence connue du watchdog à des moments respectifs également connus du watchdog,
ou
- l'information ou des informations que le watchdog obtient du processeur est/sont transmise(s) par le processeur au watchdog en réaction à une demande adressée au processeur par le watchdog.

7. Procédé selon l'une des revendications 1 à 6, **caractérisé en ce que** le watchdog obtient au moins une fois du processeur ou d'une autre unité ou d'une mémoire des données portant sur le début et la fin de la fenêtre de temps d'attente respective et/ou **en ce que** des fenêtres de temps d'attente qui se suivent respectivement sont séparées les unes des autres par un intervalle, ou **en ce que** la fin d'une fenêtre de temps d'attente définit le début de la fenêtre de temps d'attente suivante ou coïncide avec le début de la fenêtre de temps d'attente suivante.

8. Procédé selon l'une des revendications 1 à 7, **caractérisé en ce que** la recherche d'un autre groupe de fenêtres de temps d'attente se poursuit si, lors de l'affectation séquentielle des fenêtres de temps d'attente d'un groupe en tant qu'événement BON ou en tant qu'événement NON, il est reconnu que, concernant le groupe actuel de fenêtres de temps d'attente, un message d'erreur ne doit pas être déclenché, ou **en ce que** la recherche d'un autre groupe de fenêtres de temps d'attente se poursuit si, lors de l'affectation séquentielle des fenêtres de temps d'attente d'un groupe en tant qu'événement BON ou en tant qu'événement NON, il est reconnu que, concernant le groupe actuel de fenêtres de temps d'attente, un message doit être déclenché.

9. Procédé selon l'une des revendications 1 à 8, **caractérisé en ce que**, par fenêtre de temps d'attente, le watchdog attend du processeur une information unique et **en ce que** le watchdog, quand il reçoit pendant une fenêtre de temps d'attente plusieurs informations, affecte à la fenêtre de temps d'attente un événement BON si le watchdog, parmi les plusieurs informations, évalue au moins une information en tant qu'événement BON.

10. Procédé selon l'une des revendications 1 à 9, **caractérisé en ce que** le processeur et le watchdog sont, après un événement BON ou après chaque événement BON, synchronisés de temps en temps en ce qui concerne le point de départ de la fenêtre de temps d'attente suivante.

11. Procédé selon l'une des revendications 1 à 10, **caractérisé en ce que** le processeur obtient les informations reçues par le watchdog et/ou les évaluations de ces informations effectuées par le watchdog pour la vérification de la fonctionnalité du watchdog et, en fonction du résultat de la vérification, déclenche une réaction signalant une erreur, par ex. émet un message d'alarme.
